# EUROPÄISCHE PATENTSCHRIFT

(11) **EP 4 351 925 B1**
(45) Veröffentlichungstag und Bekanntmachung des Hinweises auf die Patenterteilung: **12.11.2025**
(21) Anmeldenummer: 22732391.2
(22) Anmeldetag: 08.06.2022
(51) Int. Cl.: B60P 7/13

(54) **ABSENKBARE CONTAINERVERRIEGELUNG**
LOWERABLE CONTAINER LOCK
VERROU ABAISSABLE POUR CONTENEUR

(30) Priorität: 10.06.2021 DE 102021115027
(43) Veröffentlichungstag der Anmeldung: 17.04.2024
(73) Patentinhaber: Hamburger Patent Schmiede GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2022/100426
(87) Internationale Veröffentlichungsnummer: WO 2022/258112

(56) Entgegenhaltungen:
- EP-A1- 1 810 879
- EP-A1- 3 802 217
- DE-A1- 19 720 238

## Beschreibung

Die Erfindung betrifft eine Containerverriegelungsvorrichtung auf einem Fahrzeug, zur Verriegelung eines auf einer Ladefläche des Fahrzeugs zu transportierenden Containers mit einem Eckbeschlag, aufweisend ein Verriegelungsgehäuse, einen Verriegelungsbolzen und einen ersten Antrieb, wobei der Verriegelungsbolzen einen Schaft und einen Verriegelungskopf hat, der in entriegeltem Zustand über eine Öffnung des Eckbeschlags des Containers einführbar und in verriegeltem Zustand den Container über die Öffnung des Eckbeschlages hintergreifende Vorsprünge sichert, und das Verriegelungsgehäuse mit dem Verriegelungsbolzen von einer Verriegelungsposition, in der der Verriegelungskopf für eine Verriegelung mit dem Eckbeschlag des Containers über die Ladefläche ausreichend hervorsteht, in eine Ruheposition, in der Verriegelungskopf nicht über die Ladefläche hervorsteht, mittels eines Hebelmechanismus absenkbar und wieder anhebbar ausgebildet ist, der erste Antrieb ausschließlich mit dem Verriegelungsbolzen wirkverbunden ist und ein zweiter Antrieb vorgesehen ist, der mit dem Hebelmechanismus wirkverbunden ist, der erste Antrieb einen ersten doppelt wirkenden Pneumatikzylinder mit einer ersten in einer Betätigungsrichtung bewegbaren Kolbenstange hat und der zweite Antrieb einen zweiten doppelt wirkenden Pneumatikzylinder mit einer zweiten ebenfalls in der Betätigungsrichtung bewegbaren Kolbenstange hat, wobei der zweite Pneumatikzylinder in der Betätigungsrichtung hinter dem ersten Pneumatikzylinder und zusammen mit diesem an und/oder in einem langgestreckten Antriebskasten angeordnet ist und über lateral geführte Schubstangen mit dem Hebelmechanismus verbunden ist, und dass der Hebelmechanismus eine am anheb- und absenkbar gelagerten Verriegelungsgehäuse horizontal und senkrecht zur Betätigungsrichtung angeordnete Kurbeldrehachse, eine mit der Schubstange gelenkig verbundene Kurbelstange und einen um die Kurbeldrehachse mittels der Kurbelstange verdrehbaren Hebel aufweist.

Eine derartige absenkbare Containerverriegelung ist aus der EP 3 802 217 A0 bzw. WO 2019/234096 A1 bekannt. Bei dieser Verriegelungsvorrichtung erfolgt der Verriegelungsvorgang stets aus der unter die Ladefläche abgesenkten Position in die verriegelte in den Eckbeschlag eingreifende, über die Ladefläche vorstehende Position.

In der noch nicht veröffentlichten DE 10 2021 112 894 des gleichen Anmelders ist eine feststehende Containerverriegelungsvorrichtung zur Verriegelung eines auf einer Ladefläche eines Fahrzeugs zu transportierenden Containers mit einem Eckbeschlag angemeldet, welche ein Verriegelungsgehäuse, einen Verriegelungsbolzen und einen Antrieb aufweist, wobei der Verriegelungsbolzen einen Schaft und einen Verriegelungskopf hat, der in entriegeltem Zustand über eine Öffnung des Eckbeschlags des Containers einführbar und in verriegeltem Zustand den Container über die Öffnung des Eckbeschlages hintergreifende Vorsprünge sichert.

An der Ladefläche des Fahrzeugs fest angeordnete Containerverriegelungsvorrichtungen sind im Übrigen im Stand der Technik in unterschiedlichsten Gestaltungen bekannt. Aus der WO 2021/007631 A1 ist eine automatische, feststehende Containerverriegelung mit zwei elektrischen Antriebsmotoren zum Verdrehen des Verriegelungsbolzens und zum Verspannen des Verriegelungsbolzens innerhalb des Eckbeschlages des aufzuladenden Containers bekannt. Ähnliche feststehende Verriegelungen sind aus der CN 211468283 U, der KR 10-2021-0096524 A, DE 10 2005 062 339 A1, DE 197 20 238 A1 und der US 2015/0232013 A1 bekannt.

Ferner ist aus der EP 1 810 879 A1 eine Vorrichtung zur Betätigung einer Verriegelung eines Verriegelungskopfes mit einem Eckbeschlag eines Containers bekannt, bei der über eine pneumatische Kolbenzylinderanordnung eine Verriegelungsklaue aus einer eingefahrenen Stellung, bei der Eckbeschlag des Containers über den Verriegelungskopf passt, in eine ausgefahrene Lage, bei der der Eckbeschlag von der Klaue hintergriffen ist, und von dort in eine Riegelstellung nach unten drückend, den Container fest verriegelnd verstellt wird. Diese Verriegelungsvorrichtung ist ebenfalls mit ihrem Verriegelungskopf fest vorstehend auf der Ladefläche des Fahrzeugs angeordnet.

Aus der DE 197 18 528 C1 ist eine Vorrichtung bekannt, die zum selektiven Hin- und Herbewegen von Antriebsteilen eines Mechanismus zum Anheben, Absenken und Verriegeln mit einem Beschlag eines Containers mittels einer Druckmittel betätigten Kolbenzylinderanordnung ausgestattet ist.

Weiter ist aus der EP 1 243 466 B1 bzw. der DE 201 19 415 U1 eine Verriegelungsvorrichtung und ein Verfahren dafür bekannt, bei dem über eine Kolbenzylinderanordnung aus der translatorischen Bewegung der Riegelmechanismus über eine daraus abgeleitete Schwenkbewegung in die ausgefahrene Position angehoben und nachfolgend der Verriegelungsvorgang durchführbar ist. Umgekehrt wird nach Lösen der Verriegelung durch entsprechende rückgerichtete translatorische Bewegung der gleichen Kolbenzylinderanordnung zunächst die Verriegelung gelöst und dann bei weiterer Ausfahrbewegung über eine daraus abgeleitete Schwenkbewegung der Riegelmechanismus in die eingefahrene Position abgesenkt.

Nachteilig bei dieser Vorrichtung ist, dass bei einer Betätigung der Verriegelungsvorrichtung stets der gesamte Bewegungsablauf, also beim Lösen der Verriegelung zunächst der Verriegelungskopf angehoben und in die entriegelte Position verdreht und anschließend die gesamte Verriegelungsvorrichtung unter das Ladeflächenniveau des Fahrzeugs abgesenkt wird. Umgekehrt wird beim Verriegeln zunächst die Verriegelungsvorrichtung angehoben, so dass sie oberhalb der Ladefläche vorsteht, und anschließend der eigentliche Verriegelungsvorgang mit dem Eckbeschlag eines aufgeladenen Containers ausgelöst. Ist eine Absenkung der Verriegelungsvorrichtung eigentlich nicht erforderlich, da an gleicher Position wieder ein Container verladen werden soll, muss gleichwohl der gesamte Bewegungsablauf abgefahren werden, was zu unnötiger Betätigung und damit Verschleiß führt und auch einem erheblichen Zeitbedarf entspricht.

Aufgabe der Erfindung ist es daher, die beiden nicht zwingend nacheinander auszuführenden Bewegungsabläufe einzeln ausführen zu können.

Gelöst wird diese Aufgabe mit einer Containerverriegelungsvorrichtung gemäß Anspruch 1.

Das Besondere ist, dass durch den gesonderten zweiten Antrieb das Anheben bzw. Absenken der Containerverriegelung über den gesonderten Antrieb unabhängig von der Betätigung der Verriegelung möglich ist. Wird beispielsweise ein Container von der Ladefläche des Fahrzeugs entladen, braucht lediglich der erste Antrieb den Verriegelungsbolzen in seinen entriegelten Zustand zu verstellen. Anschließend kann der Container entladen werden. Wenn ein gleichartiger Container wieder auf die Ladefläche mit gleicher Verriegelungsposition gesetzt wird, braucht die Verriegelungsvorrichtung nicht abgesenkt zu werden, also kann eine Betätigung des zweiten Antriebs ausbleiben und ein neu abgesetzter Container wieder durch Betätigung des ersten Antriebs und damit Verstellung des Verriegelungsbolzens vom entriegelten Zustand in den verriegelten Zustand gesichert werden. Eine unnötige Betätigung des Hebelmechanismus zum Absenken der Containerverriegelung unter die Ladefläche und wieder Anheben der Containerverriegelung über die Ladefläche hervorstehend kann also unterbleiben.

Dabei haben der erste Antrieb einen ersten doppelt wirkenden Pneumatikzylinder mit einer ersten in einer Betätigungsrichtung bewegbaren Kolbenstange hat und der zweite Antrieb einen zweiten doppelt wirkenden Pneumatikzylinder mit einer zweiten ebenfalls in der Betätigungsrichtung bewegbaren Kolbenstange, wobei der zweite Pneumatikzylinder in der Betätigungsrichtung hinter dem ersten Pneumatikzylinder und zusammen mit diesem an und/oder in einem langgestreckten Antriebskasten angeordnet ist und über lateral geführte Schubstangen mit dem Hebelmechanismus verbunden ist. Somit können die beiden Antriebe in einem langgestreckten schmalen Antriebskasten hintereinander angeordnet werden, der an der Ladefläche des Fahrzeugs, insbesondere Containerchassis problemlos zwischen den Haltetraversen des Chassis montierbar ist. Eine Nachrüstung bereits vorhandener Containerchassis mit dieser anheb- und absenkbaren Containerverriegelung ist somit ohne großen Aufwand möglich. Da ferner bei Containersattelzügen eine Druckluftversorgungüber das Zugfahrzeug auf dem Containerchassis möglich ist, können bevorzugt Pneumatikzylinder für die Betätigung verwendet werden.

Dabei weist der Hebelmechanismus eine am anheb- und absenkbar gelagerten Verriegelungsgehäuse horizontal und senkrecht zur Betätigungsrichtung angeordnete Kurbeldrehachse, eine mit der Schubstange gelenkig verbundene Kurbelstange und einen um die Kurbeldrehachse mittels der Kurbelstange verdrehbaren Hebel auf. Somit kann das Verriegelungsgehäuse über den Hebelmechanismus mit dem sich bei Betätigung des zweiten Antriebs verdrehenden Hebel durch Abstützung auf eine tiefer abgesetzte Bodenplatte des Antriebskastens angehoben und in angehobener Stellung lastaufnehmend abgestützt werden. Dafür weist der Hebel an seinem äußeren, zur Kurbeldrehachse fernen Ende eine gerade Stützkante auf.

Um eine gleiche Betätigungsart des Verriegelungsbolzens im Verriegelungsgehäuse gemäß der noch nicht veröffentlichten DE 10 2021 112 894 realisieren zu können, ist ein Keilschlitten im Verriegelungsgehäuse angeordnet und lateral hin- und herbewegbar gelagert und steht in der Verriegelungsposition des Verriegelungsgehäuses eine Antriebsklaue am freien Ende der ersten Kolbenstange mit dem Keilschlitten in Eingriff. Beim Absenken des Verriegelungsgehäuses mit dem Verriegelungsbolzen in die abgesenkte Ruheposition wird der im Verriegelungsgehäuse angeordnete Keilschlitten mitabgesenkt und somit von der Antriebsklaue am freien Ende der ersten Kolbenstange getrennt und später beim wieder Anheben des Verriegelungsgehäuses von der Ruheposition zurück in die Verriegelungsposition wieder in Eingriff gebracht.

Dadurch, dass eine Sperreinrichtung am langgestreckten Antriebskasten angeordnet ist, die eine mit Federkraft beaufschlagte Sperre aufweist, die in den lateralen Bewegungsweg des Keilschlittens eingreifbar ausgebildet ist, wobei zwischen der Sperre und dem Keilschlitten eine Auflaufanschrägung ausgebildet ist, wird beim Anheben des Verriegelungsgehäuses von der Ruheposition in die Verriegelungsposition ein Freigeben der Sperre bewirkt. Somit kann ein Absenken und wieder Anheben des Verriegelungsgehäuses auch bei einer Containerverriegelungsvorrichtung mit einer Sperreinrichtung gegen laterales Verstellen des Keilschlittens ermöglicht werden.

Nachfolgend wird ein Ausführungsbeispiel der Erfindung anhand der beiliegenden Figuren detailliert beschrieben.

Darin zeigt:
- Fig. 1: eine räumliche Ansicht der absenkbaren Containerverriegelungsvorrichtung in seiner Ruheposition,
- Fig. 2: in räumlicher Ansicht die Containerverriegelungsvorrichtung gemäß Fig. 1 in angehobener Verriegelungsposition,
- Fig. 3 a, b: eine Aufsicht sowie einen Querschnitt zur Containerverriegelungsvorrichtung im Ruhezustand gemäß Fig. 1,
- Fig. 4 a, b: die Containerverriegelungsvorrichtung in Aufsicht und Querschnitt in Verriegelungsposition gemäß Fig. 2 und
- Fig. 5 a, b: die in den Fig. 4 a und b im Querschnitt bzw. Aufsicht dargestellte Containerverriegelungsvorrichtung während des Verriegelungsvorganges.

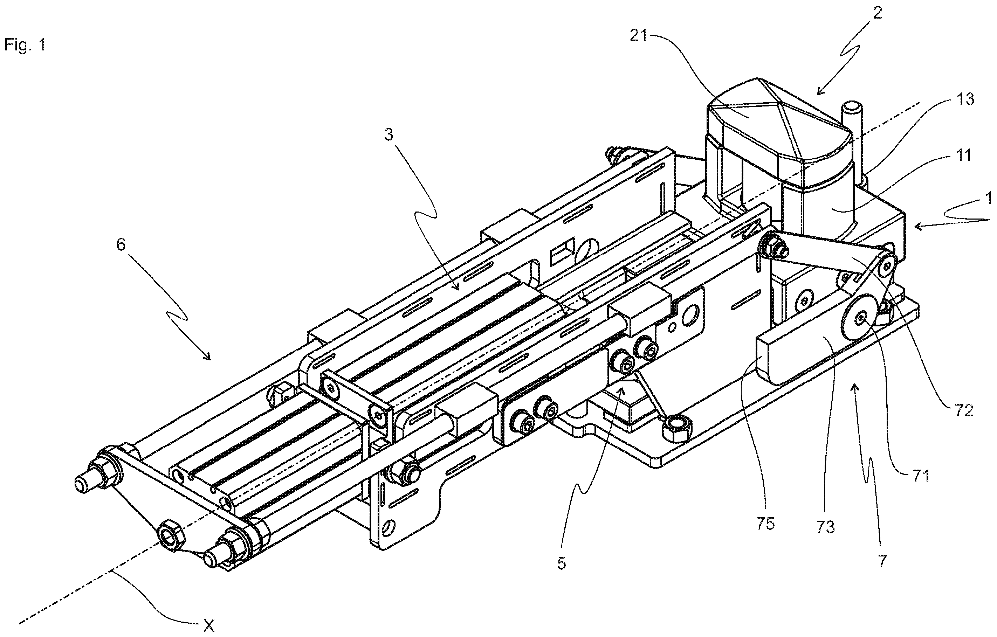

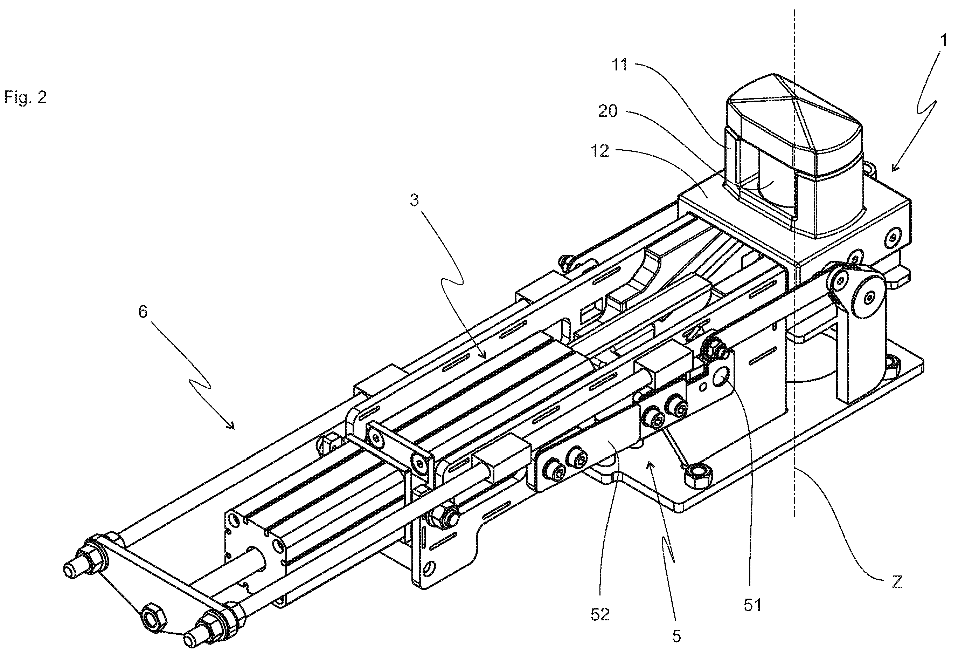

In Fig. 1 ist in räumlicher Ansicht eine Containerverriegelungsvorrichtung mit einem absenkbaren Verriegelungsgehäuse 1 in abgesenktem Zustand (Ruheposition) dargestellt. In Fig. 2 ist in entsprechender räumlicher Ansicht die Containerverriegelung gemäß Fig. 1 mit ihrem Verriegelungsgehäuse 1 in angehobener Stellung (Verriegelungsposition) dargestellt. Die Containerverriegelungsvorrichtung weist am Verriegelungsgehäuse 1 ein Führungsbauteil 11 sowie eine Lastauflagefläche 12 auf. Ferner gehört zur Verriegelung ein Verriegelungsbolzen 2, der mit seinem Schaft 20 um eine vertikale Achse Z im Verriegelungsgehäuse 1 drehbar und in axialer Richtung verschiebbar gelagert ist.

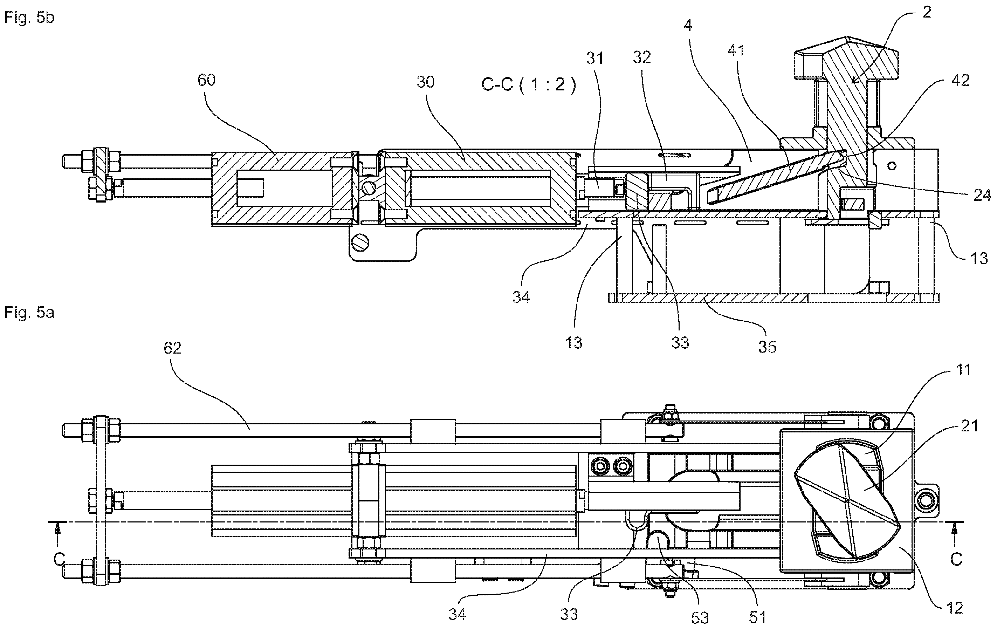

Der Verriegelungsbolzen 2 weist am oberen Ende des Schaftes 20 einen Verriegelungskopf 21 auf, der im entriegelten Zustand, so wie in den Fig. 1 und 2 dargestellt, das Führungsbauteil 11 fluchtend überdeckt. In diesem entriegelten Zustand kann ein Container, sofern sich die Containerverriegelungsvorrichtung in Verriegelungsposition, also angehobener Position gemäß Fig. 2 befindet, beim Abladen auf die Ladefläche des Fahrzeugs mit seinem Eckbeschlag und der darin ausgebildeten Öffnung über den Verriegelungskopf 21 und das Führungsbauteil 11 auf der Lastauflagefläche 12 abgesetzt werden. Anschließend kann durch Betätigung der Verriegelungsvorrichtung der Verriegelungsbolzen 2 und somit der Verriegelungskopf 21 verdreht und zwischen den Abschnitten des Führungsbauteils 11 so abgesenkt werden, dass der Verriegelungskopf 21 über die Öffnung des Eckbeschlages den Container formschlüssig hintergreifend hält (verriegelter Zustand). Ein Zwischenzustand zu diesem verriegelten Zustand ist in Fig. 5 a und b dargestellt.

Zum Antrieb der Verriegelungsvorrichtung ist ein erster Antrieb 3 in Form eines ersten doppelt wirkenden Pneumatikzylinders 30 in einem landgesteckten Antriebskasten 34 vorgesehen. Der erste doppelt wirkende Pneumatikzylinder 30 wirkt mit seiner in Richtung auf das Verriegelungsgehäuse 1 und den darin gelagerten Verriegelungsbolzen 2 orientierten ersten Kolbenstange 31 über eine Antriebsklaue 32 auf einen Keilschlitten 4, der innerhalb des Verriegelungsgehäuses 1 lateral, also in Bewegungsrichtung X der ersten Kolbenstange 31 hin und her bewegbar ist.

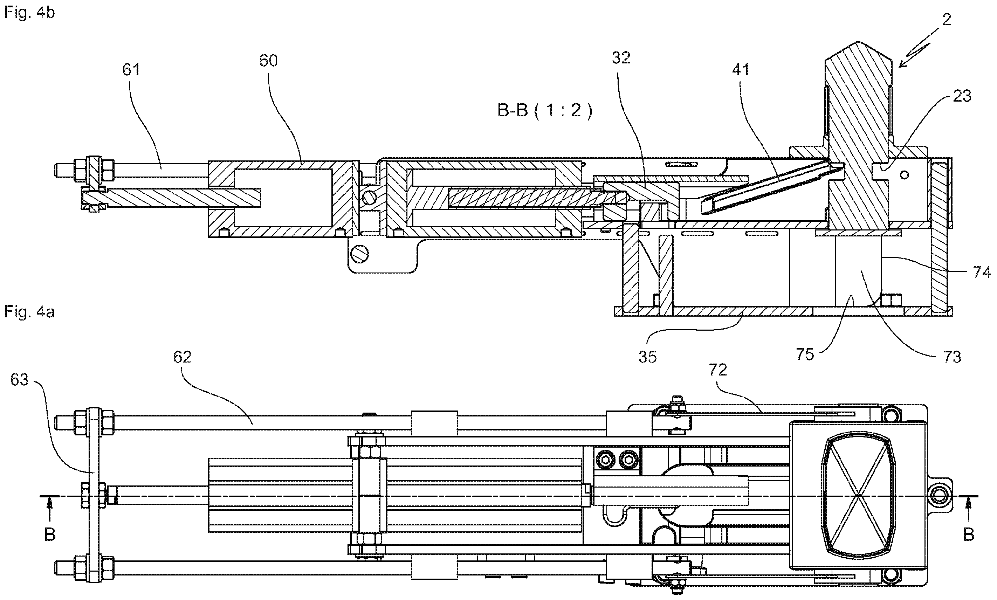

Im Keilschlitten 4 ist eine Auflaufschräge 41 ausgebildet, die mit einer entsprechend zugeordneten Aussparung 23 im Schaft 20 des Verriegelungsbolzens 2 so zusammenwirkt, dass beim Einschieben des Keilschlittens 4 in Richtung auf den Verriegelungsbolzen 2 von der in Fig. 2 dargestellten Position (siehe auch Fig. 4 a, 4 b) in die in Fig. 5 a, b dargestellte, bereits leicht verdrehte Position des Verriegelungsbolzens 2 verdreht wird, was in Fig. 5 a an dem schräg gestellten Verriegelungskopf 21 erkennbar ist. Dabei wirkt die Auflaufschräge 41, insbesondere mit einem Schubvorsprung 42 (siehe Fig. 5 b) mit der Aussparung 23 und dort insbesondere einer Anlagekante 24 so zusammen, dass zunächst der Verriegelungsbolzen 2 mit seinem Schaft 20 um die vertikale Achse Z um 90 ° verdreht und anschließend bei weiterem Einschieben des Keilschlittens 4 der Verriegelungsbolzen 2 und somit der mit dem Schaft 20 verbundene Verriegelungskopf 21 zwischen den beiden Abschnitten des Führungsbauteils 11 abgesenkt wird. Dieser Verriegelungsvorgang ist in der noch nicht veröffentlichten DE 10 2021 112 894 des gleichen Anmelders beschrieben.

Darin ist also genauer beschrieben, dass bei Betätigung der Containerverriegelung bei Erreichen des verriegelten Zustands der Keilschlitten 4 vollständig in Zeichenebene gemäß Fig. 5 b nach rechts verschoben ist und folglich der Verriegelungskopf 21 um 90 ° zur Ansicht gemäß Fig. 4 a verstellt und innerhalb eines über die Verriegelungsvorrichtung abgestellten Eckbeschlags eines aufgeladenen Containers diese hintergreifend verriegelt ist.

Dabei wirkt eine Sperreinrichtung 5 mit einer über eine Blattfeder 52 federnd vorbelasteten Sperre 51 so am langgestreckten Antriebskasten 34, dass beim Erreichen des verriegelten Zustandes die Sperre 51 mittels der Blattfeder 52 in den Laufweg des Keilschlittens 4 hineinfedert, sodass der Keilschlitten 4 nicht rückgestellt werden kann, also eine formschlüssige Sicherung im verriegelten Zustand vorliegt.

Wie in Fig. 5 a in der Aufsicht erkennbar ist, ist an der Antriebsklaue 32, die am freien Ende der ersten Kolbenstange 31 angeordnet ist, ein Auslösevorsprung 33 angeordnet, der mit einem Verdrängungsbauteil 53 der Sperreinrichtung 5 derart zusammenwirken kann, dass dann, wenn die Containerverriegelung vom verriegelten Zustand in den entriegelten Zustand mittels Betätigung des ersten doppelt wirkenden Pneumatikzylinders 30 geöffnet werden soll, zunächst ein kurzer Leerhub ausgeführt wird, mit dem der Auslösevorsprung 33 das Verdrängungsbauteil 53 und somit die Sperre 51 gegen den Auflastdruck der Blattfeder 52 aus dem Schubweg des Keilschlittens 4 herausdrückt. Bei weiterem Bewegungsablauf rutscht dann der Keilschlitten 4 wieder vor die Sperre 51, also in Zeichenebene in Fig. 5 a wieder nach links zurück, womit der Schaft 20 mittels der in der Aussparung 23 entlang gleitenden Auflaufschräge 41 angehoben und schließlich in die in Fig. 2 dargestellte Stellung rückgedreht wird.

Diese bisher beschriebenen Bauteile und Betätigungselemente beziehen sich auf die Verriegelung eines Containers mittels des Verriegelungsbolzens 2 im Verriegelungsgehäuse 1, solange die Containerverriegelungsvorrichtung in Verriegelungsposition, also in angehobener Position vorliegt. Nun werden die Bauteile zum Absenken und Anheben und der entsprechende Funktionsablauf dazu beschrieben.

Im bzw. am langgesteckten Antriebskasten 34 ist zusätzlich ein zweiter Antrieb 6 in Verlängerung des ersten Antriebs 3 angeordnet, der als zweiter doppelt wirkender Pneumatikzylinder 60 ausgebildet ist und eine zweite Kolbenstange 61 aufweist, die in umgekehrter Richtung (Betätigungsrichtung X) zur ersten Kolbenstange 31 orientiert ist. Am freien Ende der zweiten Kolbenstange 61 ist eine Traverse 63 angeordnet, an der zwei Schubstangen 62 beidseitig und parallel zur Längsachse des langgesteckten Antriebskastens 34 angeordnet sind. Die Schubstangen 62 sind im hier dargestellten Ausführungsbeispiel an geeigneten Lagern außenseitig des langgestreckten Antriebskastens 34 gehalten. Die Kolbenstangen 31, 61 sowie die Schubstangen 62 sind in Betätigungsrichtung X (Fig. 2) bewegbar. Am freien Ende der Schubstangen 62 ist ein Hebelmechanismus 7 angeordnet, der beidseitig des langgestreckten Antriebskastens 34 angeordnet ist und jeweils eine Kurbelstange 72 hat, die auf einen Hebel 73 wirkt, wobei der Hebel 73 um eine am Verriegelungsgehäuse 1 gelagerten Kurbeldrehachse 71 verschwenkbar gelagert ist. Wie bereits eingangs bei der Erläuterung zu den Fig. 1 und 2 dargestellt, ist das Verriegelungsgehäuse 1 anheb- und absenkbar, also in Z-Richtung in geeigneten Schublagern 13 verschiebbar gelagert, wobei die Schublager 13 für die Geradführung beim Verschieben des Verriegelungsgehäuses 1 ausgebildet sind und folglich ein Verkanten verhindern.

Nachfolgend wird die Funktion zum Heben und Senken des Verriegelungsgehäuses 1 durch den zweiten Antrieb 6 beschrieben.

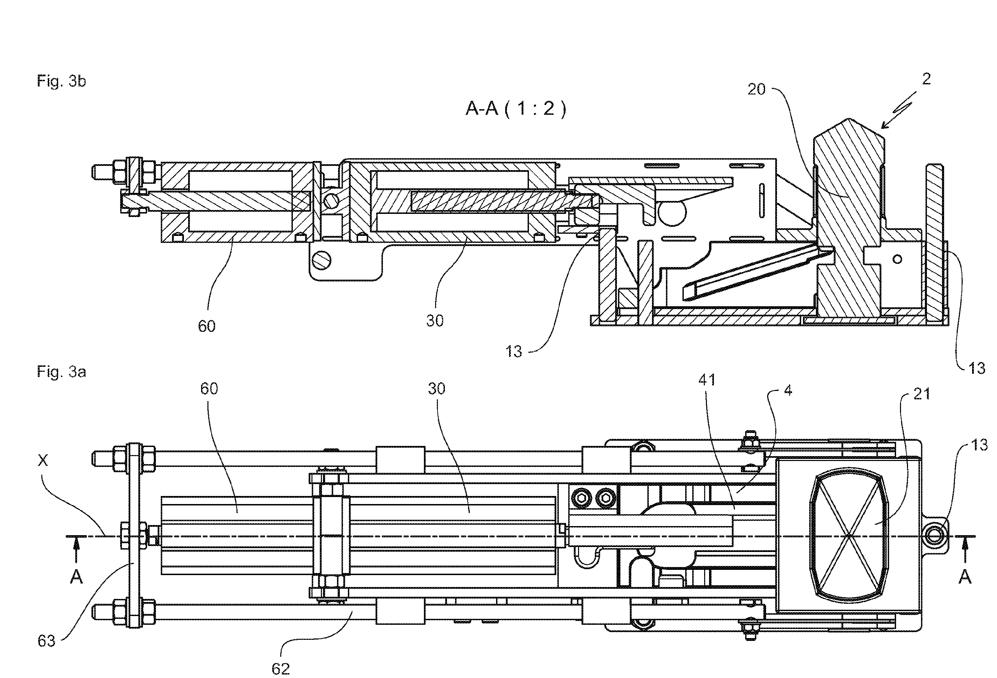

Aus der abgesenkten Stellung (Ruheposition) des Verriegelungsgehäuses 1 entsprechend Fig. 1 und Fig. 3 a, b wird das Verriegelungsgehäuse 1 mit dem Verriegelungsbolzen 2 durch Betätigung des zweiten Antriebs 6 in folgender Weise angehoben. In abgesenkter Position (Ruheposition) ist die zweite Kolbenstange 61 des zweiten doppelt wirkenden Pneumatikzylinders 60 eingefahren, wie beispielsweise Fig. 1 zeigt. Damit ruht das Verriegelungsgehäuse 1 mit seiner Unterseite auf eine tiefer abgesetzte Bodenplatte 35 des langgestreckten Antriebskasten 34.

Wird nun der zweite doppelt wirkende Pneumatikzylinder 60 betätigt, fährt die zweite Kolbenstange 61 aus und überträgt die Bewegung in Betätigungsrichtung X über die Traverse 63 auf die beiden Schubstangen 62, sodass über den Hebelmechanismus 7, nämlich die Kurbelstange 72 und den Hebel 73, dieser Hebel 73 um die Kurbeldrehachse 71 um 90 ° in der in Fig. 1 und Fig. 2 gesehenen räumlichen Ansicht gegen den Uhrzeigersinn verdreht wird. Dabei rutscht die Außenseite 74 des Hebels 73 über die Bodenplatte 35 des langgestreckten Antriebskasten 34 und hebt das Verriegelungsgehäuse 1 mit dem Verriegelungsbolzen 2, geführt durch die Schublager 13 exakt in vertikaler Richtung Z an. In dieser in Fig. 2 dargestellten angehobenen Stellung (Verriegelungsposition) ist der Hebel 73 in um 90 ° gedrehter Position dargestellt, wobei der Hebel 73 mit einer Stützkante 75 auf der Bodenplatte 35 des langgestreckten Antriebskastens 34 auflagert. Etwaige Auflasten auf den Verriegelungsbolzen 2 bzw. das Verriegelungsgehäuse 1 beim Absetzen eines Containers werden somit in die Konstruktion und somit auf die Ladefläche des Fahrzeugs abgeleitet.

Beim Bewegen des Verriegelungsgehäuses 1 in vertikaler Richtung (Z) wird auch der im Verriegelungsgehäuse 1 geführte Keilschlitten 4 mitangehoben und kurz vor Erreichen der Verriegelungsposition kommt der Keilschlitten 4 mit der Antriebsklaue 32 an der ersten Kolbenstange 31 in Eingriff, sodass nachfolgend bei Betätigung des ersten Antriebs 3 eine Betätigung des Verriegelungsbolzens 2 durch Verschieben des Keilschlittens 4 möglich ist. Dabei ist wichtig, dass der Eingriff des Keilschlittens 4 in die Antriebsklaue 32 ein ausreichendes Spiel aufweist, wie dies aus den Fig. 4 b und Fig. 5 b im Vergleich im Querschnitt nachvollziehbar ist.

Soll nun die Containerverriegelung wieder abgesenkt werden, wird der zweite doppelt wirkende Pneumatikzylinder 60 entsprechend betätigt und die zweite Kolbenstange 61 eingezogen, womit über Traverse 63 und Schubstangen 62 der Hebelmechanismus 7 wieder in seine Grundstellung (Ruheposition) durch Rückdrehen des Hebels 73 um Kurbeldrehachse 71 mittels Kurbelstange 72 rückgestellt wird. Damit senkt sich das Verriegelungsgehäuse 1 mit den darin befindlichen Verriegelungsbolzen 2 und dem Keilschlitten 4 in seine Ruheposition direkt auf der Bodenplatte 35 aufliegend ab.

### Bezugszeichenliste

- 1: Verriegelungsgehäuse
- 11: Führungsbauteil
- 12: Lastauflagefläche
- 13: Schublager

- 2: Verriegelungsbolzen
- 20: Schaft
- 21: Verriegelungskopf
- 23: Aussparung
- 24: Anlagekante

- 3: erster Antrieb
- 30: erster doppelt wirkender Pneumatikzylinder
- 31: erste Kolbenstange
- 32: Antriebsklaue
- 33: Auslösevorsprung
- 34: langgestreckter Antriebskasten
- 35: Bodenplatte

- 4: Keilschlitten
- 41: Auflaufschräge
- 42: Schubvorsprung

- 5: Sperreinrichtung
- 51: Sperre
- 52: Blattfeder
- 53: Verdrängungsbauteil

- 6: zweiter Antrieb
- 60: zweiter doppelt wirkender Pneumatikzylinder
- 61: zweite Kolbenstange
- 62: Schubstange
- 63: Traverse

- 7: Hebelmechanismus
- 71: Kurbeldrehachse
- 72: Kurbelstange
- 73: Hebel
- 74: Außenseite
- 75: Stützkante

- X: Betätigungsrichtung
- Z: Vertikale Achse

## Patentansprüche

1. Containerverriegelungsvorrichtung auf einem Fahrzeug, zur Verriegelung eines auf einer Ladefläche des Fahrzeugs zu transportierenden Containers mit einem Eckbeschlag, aufweisend ein Verriegelungsgehäuse (1), einen Verriegelungsbolzen (2) und einen ersten Antrieb (3), wobei
- der Verriegelungsbolzen (2) einen Schaft (20) und einen Verriegelungskopf (21) hat, der in entriegeltem Zustand über eine Öffnung des Eckbeschlags des Containers einführbar und in verriegeltem Zustand den Container über die Öffnung des Eckbeschlages hintergreifende Vorsprünge sichert,
- das Verriegelungsgehäuse (1) mit dem Verriegelungsbolzen (2) von einer Verriegelungsposition, in der der Verriegelungskopf (21) für eine Verriegelung mit dem Eckbeschlag des Containers über die Ladefläche ausreichend hervorsteht, in eine Ruheposition, in der der Verriegelungskopf (21) nicht über die Ladefläche hervorsteht, mittels eines Hebelmechanismus (7) absenkbar und wieder anhebbar ausgebildet ist,
- der erste Antrieb (3) ausschließlich mit dem Verriegelungsbolzen (2) wirkverbunden ist und
- ein zweiter Antrieb (6) vorgesehen ist, der mit dem Hebelmechanismus (7) wirkverbunden ist, **dadurch gekennzeichnet, dass** der erste Antrieb (3) einen ersten doppelt wirkenden Pneumatikzylinder (30) mit einer ersten in einer Betätigungsrichtung (X) bewegbaren Kolbenstange (31) hat und der zweite Antrieb (6) einen zweiten doppelt wirkenden Pneumatikzylinder (60) mit einer zweiten ebenfalls in der Betätigungsrichtung (X) bewegbaren Kolbenstange (61) hat, wobei der zweite Pneumatikzylinder (60) in der Betätigungsrichtung (X) hinter dem ersten Pneumatikzylinder (30) und zusammen mit diesem an und/oder in einem langgestreckten Antriebskasten (34) angeordnet ist und über lateral geführte Schubstangen (62) mit dem Hebelmechanismus (7) verbunden ist, und
dass der Hebelmechanismus (7) eine am anheb- und absenkbar gelagerten Verriegelungsgehäuse horizontal und senkrecht zur Betätigungsrichtung (X) angeordnete Kurbeldrehachse (71), eine mit der Schubstange (62) gelenkig verbundene Kurbelstange (72) und einen um die Kurbeldrehachse (71) mittels der Kurbelstange (72) verdrehbaren Hebel (73) aufweist.

2. Containerverriegelungsvorrichtung nach Anspruch 1, **dadurch gekennzeichnet, dass** ein Keilschlitten (4) im Verriegelungsgehäuse (1) angeordnet und lateral hin- und herbewegbar gelagert ist und in der Verriegelungsposition des Verriegelungsgehäuses (1) eine Antriebsklaue (32) am freien Ende der ersten Kolbenstange (31) mit dem Keilschlitten (4) in Eingriff steht.

3. Containerverriegelungsvorrichtung nach Anspruch 2, **dadurch gekennzeichnet, dass** eine Sperreinrichtung am langgestreckten Antriebskasten (34) angeordnet ist, die eine mit Federkraft beaufschlagte Sperre (51) aufweist, die in den lateralen Bewegungsweg des Keilschlittens (4) eingreifbar ausgebildet ist, wobei zwischen der Sperre (51) und dem Keilschlitten (4) eine Auflaufanschrägung ausgebildet ist, die beim Anheben des Verriegelungsgehäuses (1) von der Ruheposition in die Verriegelungsposition ein Freigeben der Sperre (51) bewirkt.

## Claims

1. Container locking device on a vehicle for locking a container with a corner fitting to be transported on a loading surface of the vehicle, comprising a lock housing (1), a locking bolt (2), and a first drive (3), wherein
- the locking bolt (2) has a shaft (20) and a locking head (21) which, in the unlocked state, can be introduced via an opening in the corner fitting of the container and, in the locked state, secures the container by means of projections engaging behind the opening in the corner fitting,
- the lock housing (1) with the locking bolt (2) can be moved from a locking position, in which the locking head (21) protrudes sufficiently above the loading surface for locking with the corner fitting of the container, into a rest position, in which the locking head (21) does not project above the loading surface, by means of a lever mechanism (7),
- the first drive (3) is operatively connected solely to the locking bolt (2), and
- a second drive (6) is provided which is operatively connected to the lever mechanism (7),
**characterized in that** the first drive (3) has a first double-acting pneumatic cylinder (30) with a first piston rod (31) movable in an actuating direction (X) and the second drive (6) has a second double-acting pneumatic cylinder (60) with a second piston rod (61) that is also movable in the actuating direction (X), wherein the second pneumatic cylinder (60) is arranged behind the first pneumatic cylinder (30) in the actuating direction (X) and together with the latter on and/or in an elongated drive box (34) and is connected to the lever mechanism (7) via laterally guided push rods (62), and
that the lever mechanism (7) has a crank rotation axis (71) arranged horizontally and perpendicular to the actuating direction (X) on the lifting and lowering lock housing, a crank rod (72) connected in an articulated manner to the push rod (62), and a lever (73) that can be rotated around the crank rotation axis (71) by means of the crank rod (72).

2. Container locking device according to claim 1, **characterized in that** a wedge slide (4) is arranged in the lock housing (1) and is mounted so that it can move back and forth laterally, and in the locking position of the lock housing (1), a drive claw (32) at the free end of the first piston rod (31) engages with the wedge slide (4).

3. Container locking device according to claim 2, **characterized in that** a blocking device is arranged on the elongated drive box (34), which has a spring-loaded lock (51) that can engage in the lateral movement path of the wedge slide (4), wherein a ramp is formed between the lock (51) and the wedge slide (4), which causes the lock (51) to be released when the lock housing (1) is lifted from the rest position into the locking position.

## Revendications

1. Dispositif de verrouillage de conteneur sur un véhicule, pour le verrouillage d'un conteneur à transporter sur une surface de chargement du véhicule et muni d'une ferrure d'angle, comprenant un boîtier de verrouillage (1), un boulon de verrouillage (2) et un premier entraînement (3), dans lequel :
- le boulon de verrouillage (2) possède une tige (20) et une tête de verrouillage (21) qui, dans l'état déverrouillé, peut être insérée par une ouverture de la ferrure d'angle du conteneur et, dans l'état verrouillé, bloque le conteneur par des saillies s'engageant derrière l'ouverture de la ferrure d'angle,
- le boîtier de verrouillage (1) avec le boulon de verrouillage (2) est conçu de manière à pouvoir être abaissé et relevé au moyen d'un mécanisme de levier (7) depuis une position de verrouillage, dans laquelle la tête de verrouillage (21) dépasse suffisamment de la surface de chargement pour un verrouillage avec la ferrure d'angle du conteneur, vers une position de repos, dans laquelle la tête de verrouillage (21) ne dépasse pas de la surface de chargement,
- le premier entraînement (3) n'est relié fonctionnellement qu'au boulon de verrouillage (2), et
- un deuxième entraînement (6) est prévu, qui est relié fonctionnellement au mécanisme de levier (7), **caractérisé en ce que** le premier entraînement (3) comprend un premier vérin pneumatique à double effet (30) avec une première tige de piston (31) pouvant être déplacée dans une direction d'actionnement (X), et le deuxième entraînement (6) comprend un second vérin pneumatique à double effet (60) avec une seconde tige de piston (61) également déplacée dans la direction d'actionnement (X), le deuxième vérin pneumatique (60) étant disposé, dans la direction d'actionnement (X), derrière le premier vérin pneumatique (30) et, avec ce dernier, dans et/ou sur un boîtier d'entraînement allongé (34) et étant relié au mécanisme de levier (7) par des tiges de poussée (62) guidées latéralement, et
**en ce que** le mécanisme de levier (7) est muni d'un pivot de manivelle (71), disposé horizontalement et perpendiculairement à la direction d'actionnement (X), monté sur le boîtier de verrouillage de manière à pouvoir être relevé et abaissé, d'une bielle (72) reliée de manière articulée à la tige de poussée (62), et d'un levier (73) pouvant être pivoté autour du pivot de manivelle (71) au moyen de la bielle (72).

2. Dispositif de verrouillage de conteneur selon la revendication 1, **caractérisé en ce qu'**un chariot en biseau (4) est disposé dans le boîtier de verrouillage (1) en étant monté de manière à pouvoir être déplacé latéralement dans un sens et dans l'autre, et une griffe d'entraînement (32) située à l'extrémité libre de la première tige de piston (31) est en prise avec le chariot en biseau (4) dans la position de verrouillage du boîtier de verrouillage (1).

3. Dispositif de verrouillage de conteneur selon la revendication 2, **caractérisé en ce qu'**un dispositif de verrouillage est disposé sur le boîtier d'entraînement allongé (34), lequel est muni d'un verrou (51) soumis à une force de ressort et qui est conçu pour entrer en prise dans le trajet de mouvement latéral du chariot en biseau (4), une pente d'appui étant formée entre le verrou (51) et le chariot en biseau (4), laquelle, lors du relevage du boîtier de verrouillage (1) de la position de repos vers la position de verrouillage, provoque le déverrouillage du verrou (51).
